Europäisches Patentamt

European Patent Office

Office européen des brevets

(11) Veröffentlichungsnummer: **0 235 693 B1**

(12) **EUROPÄISCHE PATENTSCHRIFT**

(45) Veröffentlichungstag der Patentschrift: 16.10.91

(51) Int. Cl.5: **A62C 3/04**, F17C 13/12

(21) Anmeldenummer: 87102375.0

(22) Anmeldetag: 19.02.87

(54) **Verfahren und Vorrichtung zum Explosionsschutz von Anlagen, Rohrleitungen u. dgl. durch Drucküberwachung.**

(30) Priorität: 05.03.86 DE 3607141

(43) Veröffentlichungstag der Anmeldung:
09.09.87 Patentblatt 87/37

(45) Bekanntmachung des Hinweises auf die
Patenterteilung:
16.10.91 Patentblatt 91/42

(84) Benannte Vertragsstaaten:
AT BE CH DE ES FR GB IT LI NL SE

(56) Entgegenhaltungen:
DE-A- 1 810 444
FR-A- 2 165 018
GB-A- 900 607
US-A- 4 267 889

(73) Patentinhaber: **IRS Industrie Rationalisierungs Systeme GmbH**
**Heidelberger Landstrasse 175**
**W-6100 Darmstadt 13(DE)**

(72) Erfinder: **Brennecke, Hermann, Dipl.-Ing.**
**Heidelberger Landstrasse 175**
**W-6100 Darmstadt 13(DE)**
Erfinder: **Liére, Horst, Dipl.-Ing.**
**Sandweg 4**
**W-6116 Eppertshausen(DE)**
Erfinder: **Koch, Reinhold, Dipl.-Ing.**
**Sommerbergring 20**
**W-6123 Bad König(DE)**

(74) Vertreter: **Brommer, Hans Joachim, Dr.-Ing. et al**
**Patentanwälte Dipl.-Ing. R. Lemcke Dr.-Ing. H.J. Brommer Bismarckstrasse 16 Postfach 4026**
**W-7500 Karlsruhe 1(DE)**

## Beschreibung

Die Erfindung betrifft ein Verfahren zum Explosionsschutz von Anlagen, Rohrleitungen u. dgl. durch Überwachung zeitlich aufeinanderfolgender Werte des Systemdruckes in den explosionsgefährdeten Bereichen und Vergleich dieser Werte mit einer vorgegebenen Druckschwelle, die um einen gewissen Sicherheitsabstand oberhalb des bei normalen Betriebsbedingungen herrschenden Systemdruckes liegt, wobei beim Überschreiten dieser Druckschwelle bestimmte Explosionsschutzmaßnahmen, insbesondere Abschotten des Explosionsherdes und Zufuhr von Löschmittel ausgelöst werden. Außerdem betrifft die Erfindung eine Vorrichtung zur Durchführung dieses Verfahrens.

Bei Explosionsschutzanlagen ist es bekannt, den Druckverlauf in den explosionsgefährdeten Anlagebereichen zu überwachen und beim Überschreiten vorgegebener Schwellenwerte eine Explosions-Unterdrückung durch Löschmittelzufuhr, Flammensperren, Abschotten u. dgl. auszulösen.

So ist es beispielsweise durch die GB-PS 900 607 bekannt, das Brandrisiko beim Betrieb eines mehrstufigen Sauerstoffverdichters dadurch zu beseitigen oder zu verringern, daß zwischen dem Druckventil einer Verdichtungsstufe und dem Saugventil der nächsten Verdichungsstufe fortlaufend der Druck gemessen wird und der Kompressor sofort abgeschaltet wird, wenn dieser Druck einen vorbestimmten Wert überschreitet.

Grundsätzlich ist man bestrebt, die für den Auslösevorgang maßgebliche Druckschwelle nur wenig oberhalb des normalerweise herrschenden Systemdruckes anzusetzen, damit eine sich anbahnende Explosion so früh wie möglich erkannt wird. Auf der anderen Seite ist der Systemdruck aber unvermeidlichen Schwankungen ausgesetzt, sei es durch Anfahr- oder Abfahrvorgänge, durch das Öffnen von Verschlüssen, Ventilen, durch atmosphärische Druckänderungen oder durch andere Ursachen. Diese harmlosen Druckschwankungen sollen zu keiner Auslösung führen. Denn jede Auslösung hat Betriebsunterbrechungen zur Folge und je nach Art des verwendeten Löschmittels muß die Anlage zunächst gründlich gereinigt werden, ehe sie wieder angefahren werden kann.

Dies zwingt dazu, die Druckschwelle, bei der die Explosionsschutzmaßnahmen ausgelöst werden, mit einem gewissen Sicherheitsabstand oberhalb des üblicherweise herrschenden Systemdruckes anzusetzen. Je nach den Betriebsparametern beträgt dieser Sicherheitsabstand mindestens 100 bis 200 mbar. Dies gilt auch dann, wenn nicht nur die statische Druckhöhe, sondern zugleich auch die Druckänderungsgeschwindigkeit überwacht wird.

Die bekannten Anlagen können dadurch mit hinreichender Sicherheit zwischen gefährlichen und ungefährlichen Druckerhöhungen unterscheiden. Allerdings hat das durch den genannten Sicherheitsabstand verzögerte Ansprechen der Anlage im Gefahrenfall zur Folge, daß ein größerer Anlagebereich von der explosionsbedingten Druckerhöhung betroffen ist und diese Anlageteile eine hohe Druckbeanspruchung aufzunehmen haben, also in entsprechend stabiler und kostenaufwendiger Konstruktion ausgeführt sein müssen.

Hiervon ausgehend, liegt die Aufgabe der vorliegenden Erfindung darin, die bekannte Explosionsüberwachung hinsichtlich ihrer Ansprechgenauigkeit zu verbessern. Es soll also früher als bisher erkannt werden, ob ein Druckanstieg harmloser oder gefährlicher Natur vorliegt.

Diese Aufgabe wird erfindungsgemäß dadurch gelöst, daß zumindest ein Teil der zeitlich aufeinanderfolgenden Druckwerte gespeichert wird, daß eine sich über ein Zeitintervall von zumindest 30 Millisekunden erstreckende Reihe der gespeicherten Druckwerte zur Ermittlung eines Druckmittelwertes verwendet wird, daß zu diesem Mittelwert der genannte Sicherheitsabstand zur Bestimmung einer neuen Druckschwelle zugeschlagen wird und diese Korrektur unter Ersatz älterer Druckwerte durch jüngere Druckwerte zur Aktualisierung der Druckschwelle fortlaufend wiederholt wird.

Durch das erfindungsgemäße Überwachungssystem wird die für die Auslösung maßgebliche Druckschwelle laufend an eventuelle Änderungen des Systemdruckes angepaßt. Der Sicherheitsabstand, der bisher nach dem größtmöglichen, im Betrieb zu erwartenden Druckanstieg zu bemessen war, kann dadurch auf einen Bruchteil des bisherigen Wertes reduziert werden. Dies hat zur Folge, daß ein explosionsbedingter Druckanstieg früher (etwa nach der halben Zeit wie bisher) erkannt wird, daß die Ausbreitung der Druckfront sich auf einen kleineren Anlagebereich beschränkt und daß der Maximalwert des Druckanstieges und die dementsprechend von den Anlageteilen aufzunehmende Druckbeanspruchung bedeutend niedriger liegen. Eine erfindungsgemäß geschützte Anlage kann also leichter und damit kostengünstiger ausgeführt werden.

Außerdem zeichnet sich die erfindungsgemäße Überwachung durch eine höhere Sicherheit gegenüber Fehlauslösungen aus. Kommt es beispielsweise durch eine Störung im Betriebsablauf zu einer unvorhergesehenen starken Druckerhöhung, so würde diese im bekannten Falle unnötigerweise die Löschmittelzufuhr auslösen. Dies ist durch die erfindungsgemäße Nachführung der Druckschwelle in Abhängigkeit vom aktuellen Systemdruck ausgeschlossen.

Um sicherzustellen, daß die Druckschwelle bei einem explosionsbedingten Anstieg nicht in dem Maße mithochläuft, daß es zu keiner Auslösung mehr kommt, werden für die Mittelwertbildung Druckwerte aus einem Zeitintervall verwendet, das wesentlich größer als das für einen explosionsbedingten Druckanstieg maßgebliche Zeitintervall ist. Dadurch wird die aktualisierte Druckschwelle dem tatsächlichen Systemdruck immer mit einer gewissen Verspätung nachgeführt, so daß sich ein explosionsbedingter Druckanstieg gar nicht oder erst so spät im Sinne einer weiteren Erhöhung der Druckschwelle auswirkt, daß sie bei einem explosionsartigen Druckanstieg auf jeden Fall überschritten wird, das Auslösekriterium der Schwellwertüberschreitung also erfüllt ist.

Das hierfür verantwortliche Zeitintervall, aus dem die Druckwerte zur Mittelwertbildung entnommen werden, ist in hohem Maße anlageabhängig, nämlich einmal von den explosionsfähigen Medien und ihrem Mischungsverhältnis, zum anderen vom Explosionsvolumen, daneben aber auch vom Ausgangsdruck und der Ausgangstemperatur in der Anlage.

Aus diesen Gründen empfiehlt es sich, das Zeitintervall, aus dem die Druckwerte zur Mittelwertbildung abgerufen werden, variieren zu können.

Ist aufgrund der spezifischen Anlageparameter bei einer Explosion ein sehr steiler Druckanstieg zu erwarten, so kann man mit kurzen Zeitintervallen von 30 bis 100 Millisekunden arbeiten, während man bei mittleren Druckanstiegsgeschwindigkeiten das Zeitintervall größer wählen muß, etwa bei 100 bis 500 Millisekunden. Für die obere Grenze des Zeitintervalles besteht vom Sicherheitsstandpunkt her kein Limit. Jedoch nimmt die Güte der Aktualisierung mit zunehmendem Zeitintervall ab und dementsprechend auch der Zeitgewinn beim Auslösen.

Man wird daher die Obergrenze in der Regel zwischen zwei und fünf Sekunden wählen.

Im allgemeinen erfolgt die Messung des Systemdruckes im Millisekundenabstand. Zur Mittelwertbildung genügt es dann, hiervon nur etwa jeden 5. bis 200. Wert, insbesondere jeden 10. bis 100. Wert für die Mittelwertbildung heranzuziehen. Man kommt dadurch mit einer geringeren Speicherkapazität aus.

Ein besonders vorteilhaftes Verfahren zur Aktualisierung der Druckschwelle in Abhängigkeit von dem jeweils herrschenden Systemdruck ist in Anspruch 13 dargestellt. Man verwendet dabei keine gespeicherte Reihe zahlreicher Druckwerte, um den Mittel- oder Zwischenwert zu ermitteln, sondern man speichert nur den jeweils zuletzt gemessenen Druckwert, kombiniert diesen mit einen später gemessenen Druckwert zur Bildung eines Zwischenwertes und addiert dann in der vorbeschriebenen Weise zu diesem Zwischenwert den genannten Sicherheitsabstand zur Bestimmung der korrigierten Druckschwelle. Diese Korrektur wird fortlaufend zur Aktualisierung der Druckschwelle wiederholt, wobei man die Freiheit hat, jeden neuen Meßwert oder nur jeden zweiten, fünften usw. Meßwert zur Ermittlung eines neuen Zwischenwertes zu benützen. Auch hier kann natürlich der Sicherheitsabstand um so kleiner gewählt werden, je häufiger, also wie aktueller, die Bestimmung der Zwischenwerte erfolgt.

Der wesentliche Vorteil bei dieser Art der Aktualisierung liegt darin, daß man praktisch keine Speicherkapazität mehr benötigt und die Berechnung viel schneller geht.

Die Verknüpfung des alten Zwischenwertes mit den neu gemessenen Druckwert zur Ermittlung eines neuen, aktuelleren Zwischenwertes kann ebenso wie bei den weiter vorn beschriebenen Verfahren, bei dem aus einer Meßwertreihe ein Mittelwert gebildet wird, auf verschiedene Weise erfolgen. Man kann etwa eine arithmetische oder integrale Mittelwertbildung vornehmen. Man kann aber auch den neuen Meßwert stärker gewichten als den alten, zu korrigierenden Wert, insbesondere wenn man den Mittelwert aus einer Vielzahl gespeicherter Meßwerte ermittelt. Erfolgt hingegen die Aktualisierung gemäß Anspruch 13, so empfiehlt es sich, den alten Zwischenwert stärker zu gewichten als den neuen Meßwert, damit ein explosionsbedingter Druckanstieg noch als solcher erkannt wird. In diesem Fall kann auf die im Anspruch 14 angegebene Formel zurückgegriffen werden.

Eine weitere Verbesserung der Ansprechempfindlichkeit läßt sich erfindungsgemäß dadurch herbeiführen, daß zusätzlich zur Schwellwertüberwachung die erste oder zweite Ableitung des zeitlichen Druckverlaufes oder eine dazu proportionale Größe überwacht und mit einem vorgegebenen Wert verglichen wird und daß die Auslösung nur dann erfolgt, wenn sowohl dieser Wert als auch die vorgegebene Druckschwelle überschritten werden.

Durch die Hinzunahme der zweiten Ableitung ergibt sich der Vorteil, daß die Tendenz des zeitlichen Druckverlaufes (im mathematischen Sinn die Krümmung der über der Zeit aufgetragenen Druckkurve) erkennbar wird. Ist der sich hierfür ergebende Wert beispielsweise null oder negativ, so kann selbst ein gravierender Anstieg des Systemdruckes über die vorgegebene Druckschwelle toleriert werden. Untersuchungen der Anmelderin haben nämlich gezeigt, daß ein explosionsbedingter Druckanstieg in Höhe der vorgegebenen Druckschwelle grundsätzlich mit progressiv zunehmendem Druck in Abhängigkeit von der Zeit erfolgt. Ist diese Progressivität beim Überschreiten des vorgegebenen Schwellwertes nicht oder nicht mehr gegeben, so beruht der Druckanstieg auf anderen, ungefährlichen Ursachen und die Auslösung von Explosionsschutzmaßnahmen kann unterbleiben.

Zugleich ergibt sich hierdurch eine nochmals verbesserte Ansprechempfindlichkeit, denn das Kriterium, wonach zur Auslösung die zweite Ableitung des zeitlichen Druckverlaufes einen bestimmten Wert überschreiten muß, wird bereits zu Beginn der Druckkurve erfüllt, wo sie noch eine relativ flache Steigung aufweist. Würde man stattdessen die Steigung der Druckkurve als Auslösekriterium heranziehen, so wäre der Gefahrenfall erst zu einem wesentlich späteren Zeitpunkt erkennbar.

Als Vorrichtung für die Durchführung der Druckaktualisierung genügt eine an den Drucksensor angeschlossene Steuereinheit zur Auswahl der zu speichernden Drucksignale, ein an die Steuereinheit angeschlossener Speicher für die Drucksignale, ein Mittelwertbildner, eine Addier- oder Multipliziereinheit, je nach dem, ob der Sicherheitsabstand durch Addition oder durch Mutiplikation zu dem errechneten Mittelwert zugeschlagen werden soll, und eine Vergleichseinheit. Diese Steuereinheit ist zweckmäßig ein programmgesteuerter Mikroprozessor.

Soll zusätzlich mit der Überwachung der zweiten Ableitung des zeitlichen Druckverlaufes oder einer dazu proportionalen Größe gearbeitet werden, so empfiehlt es sich, die bekannte Auswerteeinheit mit einer Differenziereinrichtung zu ergänzen, deren Ausgang an eine Vergleichseinrichtung angeschlossen ist, an dem der vorgegebene Wert ansteht, daß der Ausgang dieser Vergleichseinrichtung an ein UND-Glied angeschlossen ist, daß andererseits an den Ausgang einer weiteren Vergleichseinheit angeschlossen ist, an der die den Systemdruck repräsentierenden Signale und die dazu vorgegebene Druckschwelle anstehen, während der Ausgang dieses UND-Gliedes an den Auslösemechanismus angeschlossen ist.

Zweckmäßig enthält diese Auswerteeinheit einen A/D-Wandler und einen programmgesteuerten Mikroprozessor.

Die Differenziereinrichtung läßt sich besonders kostengünstig bauen, wenn sie aus einem Differenzbildner und einem Speicher besteht, wobei der Differenzbildner zunächst aus aufeinanderfolgenden Drucksignalen $P_1$, $P_2$ den Signalunterschied $\Delta P_n = P_2 - P_1$ und sodann die Differenz zwischen aufeinanderfolgenden Signalunterschieden $\Delta P_n - \Delta P_{n-1}$ ermittelt. Anstelle einer mathematischen zweiten Ableitung wurde also lediglich eine zweifache Differenzbildung vorgenommen, die aufgrund der gleichbleibenden Zeitabstände zwischen den einzelnen Druckwerten direkt proportional zur zweiten Ableitung ist.

Der vorgegebene Vergleichswert für die zweite Ableitung bzw. für die dazu proportionale Größe kann mit null oder einem positiven Wert angesetzt werden. Dies ist ebenfalls von den weiter oben angegebenen Explosionsparametern abhängig.

Weitere Merkmale ergeben sich aus der nachfolgenden Beschreibung eines Ausführungsbeispieles anhand der Zeichnung; dabei zeigt:

Fig. 1    eine schematische Darstellung der Überwachungseinrichtung;

Fig. 2    den Verlauf der Druckschwelle bei Anwendung der Überwachungseinrichtung nach Fig. 1 im Vergleich zum Stand der Technik;

Fig. 3    eine schematische Darstellung einer ergänzten Überwachungseinrichtung und

Fig. 4    den Verlauf der Druckschwelle bei Anwendung der Einrichtung nach Fig. 3.

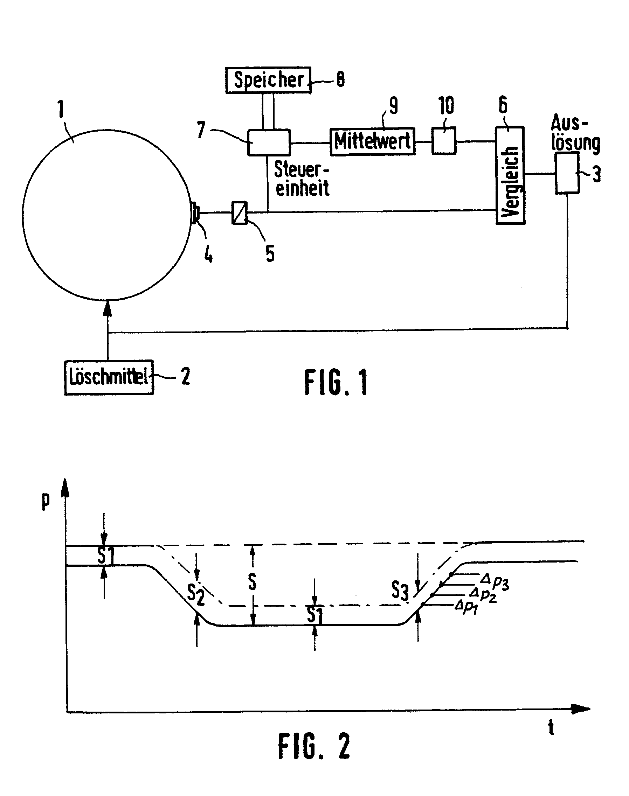

Gemäß Fig. 1 ist der explosionsgefährdete Anlagenbereich als Druckbehälter 1 dargestellt. An ihn ist in an sich bekannter Weise ein Löschmittel-Vorratstank 2 angeschlossen, wobei die Löschmittelzufuhr durch eine Auslöseeinheit 3 gesteuert wird. Außerdem kann die Auslöseeinheit 3 in an sich bekannter Weise den Druckbehälter 1 durch Sperrklappen in seinen Zu- und Abgangsleitungen abschotten und ggf. weitere Schutzmaßnahmen auslösen.

An dem Druckbehälter 1 ist ein Drucksensor 4 angebaut, dessen Signale über einen Analog/Digital-Wandler 5 einer Vergleichseinheit 6 zugeführt und dort mit einer am anderen Eingang der Vergleichseinheit anstehenden Druckschwelle verglichen werden. Wird diese Druckschwelle vom Behälterdruck überschritten, so werden durch Aktivierung der Auslöseeinheit 3 die üblichen Schutzmaßnahmen eingeleitet.

Wesentlich ist nun, daß die an der Vergleichseinheit 6 anstehende Druckschwelle nicht konstant ist, sondern fortlaufend dem im Behälter 1 herrschenden Druck nachgeführt wird. Hierzu ist ein zweiter Ausgang des Analog/Digital-Wandlers 5 an eine Steuereinheit 7 angeschlossen. Die Steuereinheit 7 wählt aus den ankommenden Drucksignalen, die in geringstmöglichem zeitlichen Abstand, in der Praxis im Abstand von etwa einer Millisekunde aufeinanderfolgen, einen Teil aus. Je nach den Betriebsbedingungen genügt es, wenn nur alle 10 bis 100 Millisekunden ein Druckwert ausgewählt und dem Speicher 8 zugeführt wird. Die Speicherkapazität ist so bemessen, daß zumindest fünf Druckwerte, besser aber erheblich mehr gespeichert werden können, wobei die Speicherung in der Weise erfolgt, daß bei Eingabe eines neuen Druckwertes jeweils der älteste Druckwert gelöscht wird.

Im gleichen Takt, wie der Speicher 8 mit neuen Druckwerten versorgt wird, sorgt die Steuereinheit 7 dafür, daß die momentan gespeicherten Werte einem Mittelwertbildner 9 zugeführt werden, der aus den gespeicherten Druckwerten einen Mittelwert errechnet. Dieser Mittelwert wird in einem Addier- oder Multiplizierglied 10 um einen einstellbaren Sicherheitszuschlag erhöht und dann als Referenzgröße der Vergleichseinheit 6 zugeführt.

Den Einfluß dieser Überwachungseinrichtung auf den Schwellwert-Verlauf zeigt Fig. 2. Darin ist in ausgezogenen Linien der Verlauf des Systemdruckes dargestellt, der sich beim Anfahren und beim Abfahren im Druckbehälter 1 einstellt. Wird wie beim Stand der Technik mit konstantem Schwellwert gearbewitet, so muß dieser oberhalb der im Betrieb zu erwartenden maximalen Druckspitzen liegen, wobei aus Sicherheitsgründen noch ein Sicherheitsabstand $S_1$ von zumindest 100 mbar einzuhalten ist. Gemäß dem Stand der Technik ergibt sich somit für die Druckschwelle die gestrichelte, horizontale Linie. Wie man sieht, hat sie gegenüber dem im Betrieb auftretenden abgesenkten Systemdruck einen etwa viermal so hohen Sicherheitsabstand wie notwendig. Ein explosionsbedingter Druckanstieg ist also erst erkennbar, wenn dieser unnötig hohe Druckunterschied überwunden worden ist.

Demgegenüber führt die erfindungsgemäße Anpassung der Druckschwelle an den aktuellen Systemdruck zu einer Abnahme der Druckschwelle beim Anfahren und zu einer Zunahme der Druckschwelle beim Abfahren der Anlage, wie der strichpunktierte Kurvenzug deutlich zeigt. Zwar folgt die Druckschwelle dem aktuellen Druckverlauf mit einer gewissen Verspätung. Diese Verspätung ist aber quantitativ gering und macht sich nur während des Anfahr- und Abfahrvorganges bemerkbar. So nimmt der Sicherheitsabstand $S_2$ beim Anfahren um 10 bis 20 % zu, wogegen er beim Abfahren entsprechend dem Kurvenzug $S_3$ entsprechend abnimmt. Während des Betriebsdruckes bleibt der Sicherheitsabstand $S_1$ unverändert. Die hohe Ansprechempfindlichkeit des erfindungsgemäßen Systems ist also unabhängig von Schwankungen des Systemdruckes gewahrt.

Unabhängig davon erlaubt die Aktualisierung der Druckschwelle, mit einem geringeren Sicherheitsabstand als bisher zu arbeiten. Es ergibt sich also grundsätzlich eine kürzere Auslösezeit als beim Stand der Technik.

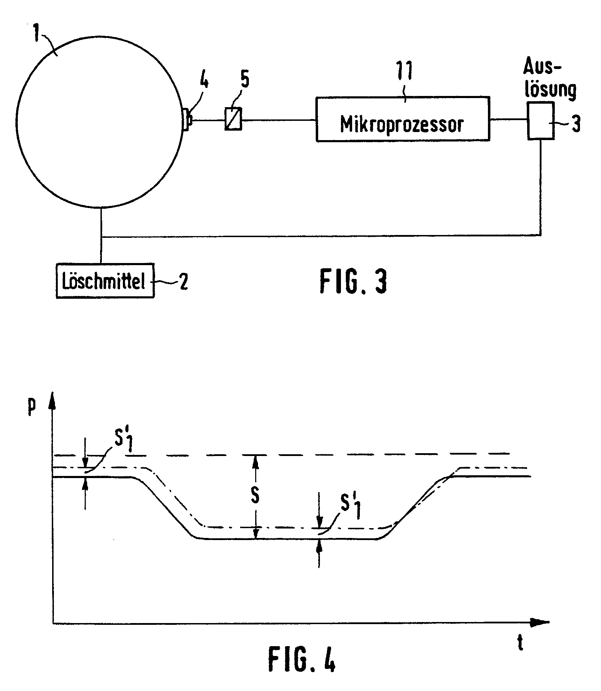

Dies gilt in besonderem Maße, wenn gemäß einer Weiterbildung der Erfindung nicht nur der Absolutdruck im Behälter 1, sondern dessen zeitlicher Ablauf, insbesondere dessen zweite Ableitung überwacht und neben dem Absolutdruck als zweites Auslösekriterium herangezogen wird. Die diesbezügliche Überwachungseinrichtung ist schematisch in Fig. 3 dargestellt. Sie weist hinter dem Druckaufnehmer 4 und dem Analog/Digital-Wandler 5 einen Mikroprozessor 11 auf, der seinerseits an die Auslöseeinheit 3 angeschlossen ist. Der Mikroprozessor 11 enthält in an sich bekannter Weise einen quarzgesteuerten Taktgeber und berechnet aus den zeitlich aufeinanderfolgenden, im allgemeinen im Millisekundenabstand ankommenden Drucksignalen $p_1$, $p_2$ etc. den Signalunterschied $\Delta p_n = p_2 - p_1$ und sodann die Differenz zwischen aufeinanderfolgenden Signalunterschieden $\Delta p_n - \Delta p_{n-1}$. Der zuletzt genannte Wert ist aufgrund des konstanten Zeitintervalles zwischen aufeinanderfolgenden Drucksignalen direkt proportional zur zweiten Ableitung des zeitlichen Druckverlaufes im Druckbehälter 1.

Die Auslösung erfolgt aber nur dann, wenn nicht nur die zweite Ableitung bzw. die dazu proportionale Größe oberhalb eines vorgegebenen Wertes liegt, sondern wenn gleichzeitig auch die Druckschwelle überschritten ist. Beide Auslösekriterien können in einer gemeinsamen Überwachungseinheit verarbeitet werden. Denn die in Fig. 1 dargestellten elektronischen Bausteine 6 bis 10 können selbstverständlich durch einen Mikroprozessor ersetzt werden, der auch die Berechnung der zweiten Ableitung vornimmt.

Den Einfluß einer derartigen kombinierten Überwachung auf den Verlauf des Schwellwertes zeigt Fig. 4. Man erkennt, daß in diesem Fall die strichpunktiert gezeichnete Druckschwelle in einem noch geringeren Sicherheitsabstand zum aktuellen Systemdruck geführt werden kann und daß sie sogar über weite Passagen vom Systemdruck überschritten werden kann, ohne daß eine Auslösung erfolgt. Denn durch Überwachung der zweiten Ableitung wird das Überschreiten der Druckschwelle beim Abfahren der Anlage als ungefährlich erkannt, weil die zweite Ableitung im Gegensatz zu einem explosionsbedingten Anstieg unter einer vorgegebenen positiven Größe, im Ausführungsbeispiel sogar bei null liegt.

Aufgrund des geringen Sicherheitsabstandes zeichnet sich die kombinierte Überwachungseinrichtung durch eine nochmalige Verkürzung der Ansprechzeit aus. Die von der Druckwelle erfaßten Anlagebereiche werden also weiter verkleinert und die von ihnen aufzunehmende Druckbelastung verringert.

Es liegt selbstverständlich auch im Rahmen der Erfindung, die Aktualisierung der Druckschwelle mit der Überwachung der ersten Ableitung des zeitlichen Druckverlaufes zu kombinieren. In der Regel dürfte sich aber durch Verwendung der zweiten Ableitung eine höhere Ansprechgeschwindigkeit ergeben.

Weiterhin liegt es im Rahmen der Erfindung, den Explosionsschutz nicht durch Überwachung des Systemdruckes, sondern durch Überwachung der Helligkeit in den explosionsgefährdeten Bereich vorzunehmen. Es wird also die Intensität der Lichtstrahlung gemessen, wobei es sich auch um das Infrarot-, Ultraviolett- oder ein anderes Wellenspektrum handeln kann.

Ebenso liegt es im Rahmen der Erfindung, anstelle des Druckes die Temperatur in den explosionsgefährdeten Bereichen zu überwachen.

Die Temperatur- oder Helligkeitswerte werden wie vorbeschrieben verarbeitet und zur Auslösung der Explosionsschutzmaßnahmen verwendet. Auch ist eine Kombination von Druck- und Helligkeitsüberwachung oder von Druck- und Temperaturüberwachung oder von Helligkeits- und Temperaturüberwachung möglich.

In den Ausführungsbeispielen nach Fig. 1 und 3 ist aus Übersichtlichkeitsgründen jeweils nur ein Drucksensor dargestellt. In der Praxis werden häufig mehrere Sensoren parallelgeschaltet und an eine gemeinsame Auslöseeinheit 3 angeschlossen. In diesem Fall empfiehlt es sich, daß jeder Sensor einen eigenen Mikroprozessor 11 aufweist und daß die Mikroprozessoren an eine gemeinsame zentrale Auslöseeinheit 3 angeschlossen sind. Dabei ist es besonders zweckmäßig, wenn die Auslöseeinheit 3 mit einer Steuereinheit kombiniert ist, an der man zentral die Druck-, Helligkeits- und/oder Temperaturschwelle, den Sicherheitsabstand und ggf. noch andere Parameter für alle Sensoren und Mikroprozessoren gleichzeitig einstellen kann.

**Patentansprüche**

1. Verfahren zum Explosionsschutz von Anlagen, Rohrleitungen u. dgl. durch Überwachung zeitlich aufeinanderfolgender Werte des Systemdruckes in den explosionsgefährdeten Bereichen und Vergleich dieser Werte mit einer vorgegebenen Druckschwelle, die um einen gewissen Sicherheitsabstand oberhalb des bei normalen Betriebsbedingungen herrschenden Systemdruckes liegt, wobei beim Überschreiten dieser Druckschwelle bestimmte Explosionsschutzmaßnahmen, insbesondere Abschotten des Explosionsherdes und Zufuhr von Löschmittel ausgelöst werden,
dadurch gekennzeichnet,
daß zumindest ein Teil der zeitlich aufeinanderfolgenden Druckwerte gespeichert wird, daß eine sich über ein Zeitintervall von zumindest 30 Millisekunden erstreckende Reihe der gespeicherten Druckwerte zur Ermittlung eines Druckmittelwertes verwendet wird, daß zu diesem Mittelwert der genannte Sicherheitsabstand zur Bestimmung einer neuen Druckschwelle zugeschlagen wird und diese Korrektur unter Ersatz älterer Druckwerte durch jüngere Druckwerte zur Aktualisierung der Druckschwelle laufend wiederholt wird.

2. Verfahren nach Anspruch 1,
dadurch gekennzeichnet,

daß das Zeitintervall für die Mittelwertbildung mindestens 50 Millisekunden, zweckmäßig 100 Millisekunden bis maximal 10 Sekunden, zweckmäßig 5 Sekunden beträgt.

3. Verfahren nach Anspruch 1 oder 2,
dadurch gekennzeichnet,
daß der Systemdruck im Millisekundenabstand gemessen und zumindest jeder 100. bis 200. Wert, maximal jeder 5. bis 10. Wert gespeichert wird.

4. Verfahren nach einem der vorhergehenden Ansprüche,
dadurch gekennzeichnet,
daß die Druckschwelle nur so lange aktualisiert wird, wie die erste oder zweite Ableitung des zeitlichen Druckverlaufes unter einem bestimmten Grenzwert liegt.

5. Verfahren nach einem der vorhergehenden Ansprüche,
dadurch gekennzeichnet,
daß zusätzlich die zweite Ableitung des zeitlichen Druckverlaufes oder eine dazu proportionale Größe überwacht und mit einem vorgegebenen Wert verglichen wird und daß die Auslösung nur dann erfolgt, wenn sowohl dieser Wert als auch die vorgegebene Druckschwelle überschritten werden.

6. Verfahren nach einem der Ansprüche 1 bis 4,
dadurch gekennzeichnet,
daß zusätzlich die erste Ableitung des zeitlichen Druckverlaufes oder eine dazu proportionale Größe überwacht und mit einem vorgegebenen Wert verglichen wird und daß die Auslösung nur dann erfolgt, wenn sowohl dieser Wert als auch die vorgegebene Druckschwelle überschritten werden.

7. Vorrichtung zur Durchführung des Verfahrens nach einem der Ansprüche 1 bis 4 in Kombination mit zumindest einem nahe dem Explosionsherd (1) angeordneten Drucksensor (5), der ein druckabhängiges elektrisches Signal erzeugt und an eine Auswerteeinheit (11) angeschlossen ist,
dadurch gekennzeichnet,
daß die Aktualisierung der Druckschwelle durch eine an den Drucksensor (4) angeschlossene Steuereinheit (7) zur Auswahl der zu speichernden Drucksignale erfolgt, daß an die Steuereinheit (7) ein Speicher (8) für die Drucksignale, ein Mittelwertbildner (9) zur Ermittlung des Druckmittelwertes, eine Addier- oder Multipliziereinheit (10) für die Berücksichtigung eines Sicherheitszuschlages und eine Vergleichseinheit (6) angeschlossen sind.

8. Vorrichtung nach Anspruch 7,
dadurch gekennzeichnet,
daß die Auswerte- und Steuereinheit ein programmgesteuerter Mikroprozessor (11) mit wählbarem Sicherheitszuschlag ist.

9. Vorrichtung nach Anspruch 7, zur Durchführung des Verfahrens nach Anspruch 5
dadurch gekennzeichnet,
daß die Auswerte- und Steuereinheit eine Differenziereinrichtung zur Ermittlung der zweiten Ableitung des zeitlichen Druckverlaufes p(t) oder einer dazu proportionalen Größe enthält, deren Ausgang an eine Vergleichseinrichtung angeschlossen ist, an dem der vorgegebene Wert ansteht und daß der Ausgang dieser Vergleichseinrichtung an ein UND-Glied angeschlossen ist, das andererseits an den Ausgang einer weiteren Vergleichseinheit (6) angeschlossen ist, an der die p(t) repräsentierenden Signale des Drucksensors (4) und die vorgegebene Druckschwelle anstehen, während der Ausgang dieses UND-Gliedes an eine Auslöseeinheit (3) angeschlossen ist.

10. Vorrichtung nach Anspruch 9,
dadurch gekennzeichnet,
daß die Auswerteeinheit ein programmgesteuerter Mikroprozessor (11) ist, der über einen Analog/Digital-Wandler (5) an den Drucksensor (4) angeschlossen ist.

11. Vorrichtung nach Anspruch 9 oder 10,
dadurch gekennzeichnet,
daß die Differenziereinrichtung aus einem Differenzbildner und einem Speicher besteht, wobei der Differenzbildner zunächst aus aufeinanderfolgenden Drucksignalen ($p_1$, $p_2$) den Signalunterschied ($\Delta p_n = p_2 - p_1$) und sodann die Differenz zwischen aufeinanderfolgenden Signalunterschieden ($\Delta p_n - \Delta p_{n-1}$) ermittelt.

12. Vorrichtung nach einem der Ansprüche 9 bis 11,
dadurch gekennzeichnet,
daß der vorgegebene Vergleichswert für die zweite Ableitung des zeitlichen Druckverlaufes bzw. für die dazu proportionale Größe mindestens mit null angesetzt ist.

13. Verfahren zum Explosionsschutz von Anlagen, Rohrleitungen und dergleichen durch Überwachung zeitlich aufeinanderfolgender Werte des Systemdruckes in den explosionsgefährdeten Bereichen und Vergleich dieser Werte mit einer vorgegebenen Druckschwelle, die um einen gewissen Sicherheitsabstand oberhalb des bei normalen Betriebsbedingungen herrschenden Systemdruckes liegt, wobei beim Überschreiten dieser Druckschwelle bestimmte Explosionsschutzmaßnahmen, insbesondere Abschotten des Explosionsherdes und Zufuhr von Löschmittel ausgelöst werden,
dadurch gekennzeichnet,
daß zumindest jeweils der letzte der zeitlich aufeinanderfolgenden Druckwerte gespeichert wird, daß dieser Druckwert mit einem später gemessenen Druckwert zur Bildung eines Zwischenwertes verknüpft wird., daß zu diesem Zwischenwert der genannte Sicherheitsabstand zur Bestimmung einer korrigierten Druckschwelle addiert wird und daß diese Korrektur der Druckschwelle unter jeweiliger Verknüpfung des zuletzt ermittelten Zwischenwertes mit einem später gemessenen Druckwert zur Aktualisierung der Druckschwelle laufend wiederholt wird.

14. Verfahren nach Anspruch 13,
dadurch gekennzeichnet,
daß die Ermittlung des Zwischenwertes nach der Formel

$$\frac{n-1}{n} \times ZW + \frac{1}{n} NW$$

erfolgt, wobei ZW der alte Zwischenwert, NW der neue, später gemessene Druckwert und n $\geq$ 2, insbesondere 2 bis 100 ist.

15. Verfahren nach einem der Ansprüche 1 bis 6 oder 13 bis 14,
dadurch gekennzeichnet,
daß anstelle des Druckes die Helligkeit (Lichtstrahlung, IR-, UV- oder anderes Wellenspektrum) in den explosionsgefährdeten Bereichen gemessen und zur Auslösung der Explosionsschutzmaßnahmen verwendet wird.

16. Verfahren nach einem der Ansprüche 1 bis 6 oder 13 bis 14,
dadurch gekennzeichnet,
daß anstelle des Druckes die Temperatur in den explosionsgefährdeten Bereichen gemessen und zur Auslösung der Explosionsschutzmaßnahmen verwendet wird.

17. Vorrichtung nach einem der Ansprüche 7 bis 12 zur Durchführung des Verfahrens gemäß Anspruch 15,
dadurch gekennzeichnet,
daß anstelle des Drucksensors (4) ein lichtempfindliches Element benutzt wird.

18. Vorrichtung nach einem der Ansprüche 7 bis 12 zur Durchführung des Verfahrens nach Anspruch 16,
dadurch gekennzeichnet,
daß anstelle des Drucksensors (4) ein Temperatursensor benutzt wird.

19. Vorrichtung nach einem der Ansprüche 7 bis 12, 17 oder 18,
dadurch gekennzeichnet,
daß jeder Sensor (4) mit einem eigenen Mikroprozessor (11) kombiniert ist.

20. Vorrichtung nach Anspruch 19,
dadurch gekennzeichnet,
daß die Mikroprozessoren (11) an eine zentrale Auslöseeinheit (3) angeschlossen sind, an der die Durck-, Helligkeits- oder Temperaturschwelle, der Sicherheitsabstand und andere Parameter zentral für alle Mikroprozessoren (11) vorgebbar sind.

## Claims

1. Method for the protection of plant, conduits and the like against explosion by monitoring temporally successive values of the system pressure in the regions in danger of explosion and comparison of these values with a pre-stated pressure threshold which lies by a certain safety interval above the system pressure prevailing under normal operating conditions, where on exceeding of this pressure threshold specific explosion protection measures are triggered, especially partitioning off of the explosion hearth by bulkheads and supply of quenching agents,

characterised in that

at least some of the temporally successive pressure values are stored, in that a series of the stored pressure values extending over a time interval of at least 30 milliseconds is used for ascertaining a mean pressure value, in that the said safety interval is added to this mean value for the determination of a new pressure threshold and this correction is continuously repeated with replacement of older pressure values by newer pressure values for the updating of the pressure threshold.

2. Method according to Claim 1,

characterised in that the time interval for the mean value formation amounts to at least 50 milliseconds, expediently 100 milliseconds to a maximum of 10 seconds, expediently 5 seconds.

3. Method according to Claim 1 or 2,

characterised in that the system pressure is measured in the millisecond spacing and at least every 100th to 200th value, at maximum every 5th to 10th value, is stored.

4. Method according to any one of the preceding Claims, characterised in that the pressure threshold is updated only as long as the first or second derivative of the temporal pressure course lies below a specific limit value.

5. Method according to any one of the preceding Claims,

characterised in that additionally the second derivative of the temporal pressure course or a value proportional thereto is monitored and compared with a pre-determined value and in that the triggering takes place only when both this value and the pre-determined pressure threshold are exceeded.

6. Method according to any one of Claims 1 to 4,

characterised in that additionally the first derivative of the temporal pressure course or a value proportional thereto is monitored and compared with a pre-determined value and in that the triggering takes place only when both this value and the pre-determined pressure threshold too are exceeded.

7. Apparatus for carrying out the method according to any one of Claims 1 to 4 in combination with at least one pressure sensor (5) arranged close to the explosion hearth (1), which sensor generates a pressure-dependent electric signal and is connected to an evaluator unit (11),

characterised in that the updating of the pressure threshold is effected by a control unit (7), connected to the pressure sensor (4), for the selection of the pressure signals to be stored, in that a store (8) for the pressure signals, a mean value former (9) for ascertaining the mean pressure value, an adding or multiplying unit (10) for the consideration of a safety margin and a comparator unit (6) are connected to the control unit (7).

8. Apparatus according to Claim 7,

characterised in that the evaluator and control unit is a programme-controlled micro-processor (11) with selectable safety margin.

9. Apparatus according to Claim 7, for carrying out the method according to Claim 5,

characterised in that the evaluator and control unit contains a differentiator device for ascertaining the second derivative of the temporal pressure course p(t) or a value proportional thereto, the output of which is connected to a comparator device on which the pre-determined value is present, and in that the output of this comparator device is connected to an AND member which is connected for the other part to the output of a further comparator unit (6), on which the signals of the pressure sensor (4), which represent p(t), and the pre-determined pressure threshold are present, while the output of this AND member is connected to a trigger unit (3).

10. Apparatus according to Claim 9,

characterised in that the evaluator unit is a programme-controlled micro-processor (11) which is connected to the pressure sensor (4) through an analog/digital transducer (5).

11. Apparatus according to Claim 9 or 10,

characterised in that the differentiator device consists of a difference former and a store, where the difference former firstly ascertains the signal difference ($\Delta p_n = p_2 - p_1$) and then the difference between successive signal differences ($\Delta p_n - \Delta p_{n-1}$), from successive pressure signals ($p_1$, $p_2$).

12. Apparatus according to any one of Claims 9 to 11,

characterised in that the pre-determined comparison value for the second derivative of the temporal pressure course or for the value proportional thereto, as the case may be, is set at least as zero.

13. Method for the protection of plant, conduits and the like against explosion by monitoring of temporally successive values of the system pressure in the regions in danger of explosion and comparison of these values with a pre-determined pressure threshold, which lies by a certain safety distance above the system pressure prevailing under normal operating conditions, where on exceeding of this pressure threshold specific explosion protection measures are triggered, especially partitioning off of the hearth of explosion by bulkheads and supply of quenching medium,

characterised in that at least the last in each case of the temporally successive pressure values is stored, in that this pressure value is linked with a subsequently measured pressure value for the formation of an intermediate value, in that the said safety margin is added to this intermediate value for the determination of a corrected pressure threshold and in that this correction of the pressure threshold, with linking in each case of the last-ascertained intermediate value with a subsequently measured pressure value is continuously repeated for the updating of the pressure threshold.

14. Method according to Claim 13,

characterised in that the ascertaining of the intermediate value takes place in accordance with the formula

$$\frac{n-1}{n} \times ZW + \frac{1}{n} NW$$

wherein ZW is the old intermediate value, NW the new, subsequently measured pressure value and $n \geq 2$, especially 2 to 100.

15. Method according to any one of Claims 1 to 6 or 13 to 14,

characterised in that instead of the pressure the brightness (light radiation, IR, UV or other wave spectrum) in the explosion-endangered regions is measured and used for initiating the explosion protection measures.

16. Method according to any one of Claims 1 to 6 or 13 to 14,
characterised in that instead of the pressure the temperature in the explosion-endangered regions is measured and used for initiating the explosion protection measures.

17. Apparatus according to any one of Claims 7 to 12 for carrying out the method according to Claim 15,

characterised in that instead of the pressure-sensor (4) a light-sensitive element is used.

18. Apparatus according to any one of Claims 7 to 12, for carrying out the method according to Claim 16, characterised in that instead of the pressure sensor (4) a temperature-sensor is used.

19. Apparatus according to one of Claims 7 to 12, 17 or 18,

   characterised in that each sensor (4) is combined with its own micro-processor (11).

20. Apparatus according to Claim 19,

   characterised in that the micro-processors (11) are connected to a central trigger unit (3) where the pressure, brightness or temperature threshold, the safety interval and other parameters can be pre-determined centrally for all micro-processors (11).

**Revendications**

1. Procédé de protection contre les explosions pour installations, conduites, et équivalents, qui opère par surveillance de valeurs successives dans le temps de la pression du système dans les régions exposées au risque d'explosion et par comparaison de ces valeurs avec un seuil de pression prédéterminé, qui est supérieur, d'une certaine marge de sécurité, à la pression du système qui règne dans les conditions normales de service, procédé dans lequel, en cas de dépassement de ce seuil, il se déclenche certaines dispositions de protection contre les explosions, en particulier l'isolement du foyer d'explosion et l'acheminement de fluides extincteurs, caractérisé en ce que
le fait qu'au moins une partie des valeurs de pression qui se succèdent dans le temps sont mémorisées, qu'une série des valeurs de pression mémorisées qui s'étend sur un intervalle de temps d'au moins 30 millisecondes sont utilisée pour calculer une valeur moyenne de la pression, en ce que la marge de sécurité précitée est ajoutée à cette valeur moyenne pour obtenir un nouveau seuil de pression et qu'on répète continuellement cette correction avec remplacement des anciennes valeurs de la pression par des valeurs de pression plus récentes pour l'actualisation du seuil de pression.

2. Procédé selon la revendication 1,
   caractérisé
   en ce que l'intervalle de temps pour la formation de la moyenne est au moins de 50 millisecondes, avantageusement de 100 millisecondes jusqu'à un maximum de 10 secondes, avantageusement de 5 secondes.

3. Procédé selon la revendication 1 ou 2,
   caractérisé
   en ce que la pression du système est mesurée à intervalles d'une milliseconde et mémorisée au moins une fois toutes les 100 à 200 valeurs, au maximum toutes les 5 à 10 valeurs.

4. Procédé selon une des revendications précédentes,
   caractérisé
   en ce que le seuil de pression n'est actualisé qu'aussi longtemps que la dérivée première ou seconde de la variation de la pression en fonction du temps est inférieure à une certaine valeur limite.

5. Procédé selon une des revendications précédentes,
   caractérisé
   en ce qu'en supplément, la dérivée seconde de la variation de la pression en fonction du temps ou une grandeur proportionnelle à cette dérivée, est surveillée et comparée à une valeur prédéterminée, et en ce que le déclenchement ne se produit que lorsque cette valeur et le seuil spécifié sont tous deux dépassés.

6. Procédé selon une des revendications 1 à 4,
   caractérisé
   en ce qu'en supplément, la dérivée première de la variation de la pression en fonction du temps, ou une grandeur qui lui est proportionnelle, est surveillée et comparée à une valeur prédéterminée et en ce que le déclenchement ne se produit lorsque cette valeur le seuil de pression prédéterminé sont tous deux dépassés.

7. Dispositif pour la mise en oeuvre du procédé selon une des revendications 1 à 4, en combinaison avec au moins un capteur de pression (5) disposé à proximité du foyer d'explosion (1) et qui produit un signal électrique fonction de la pression et est connecté à une unité d'exploitation (11),
   caractérisé
   en ce que l'actualisation du seuil de pression est réalisée par une unité de commande (7) raccordée au capteur de pression (4), et qui sert à la sélection des signaux de pression à mémoriser, en ce qu'à l'unité de commande (7), sont connectés une mémoire (8) destinée à mémoriser les signaux de pression, un organe de formation de moyenne (9), servant à former une valeur moyenne de la pression, une unité de sommation ou de multiplication (10) servant à prendre en compte une majoration de sécurité, et une unité de comparaison (6).

8.  Dispositif selon la revendication 7,
caractérisé
en ce que l'unité d'exploitation et de commande est un microprocesseur (11) commandé par programme qui comporte une majoration de sécurité pouvant être sélectionnée.

9.  Dispositif selon la revendication 7, pour la mise en oeuvre du procédé selon la revendication 5,
caractérisé
en ce que l'unité d'exploitation et de commande comprend un dispositif de différentiation servant à former la dérivée seconde de la variation de la pression en fonction du temps p(t) ou une grandeur proportionnelle à cette dérivée, dont la sortie est connectée à un dispositif de comparaison, auquel la valeur prédéterminée est transmise, et en ce que la sortie de ce dispositif de comparaison est connectée à un circuit ET qui, d'un autre côté, est connecté à la sortie d'une autre unité de comparaison (6) à laquelle sont transmis les signaux du capteur de pression (4) qui représentent p(t) et le seuil de pression spécifié, tandis que la sortie de ce circuit ET est connectée à une unité de déclenchement (3).

10.  Dispositif selon la revendication 9,
caractérisé
en ce que l'unité d'exploitation est un microprocesseur (11) commandé par programme qui est connecté au capteur de pression (4) par l'intermédiaire d'un convertisseur analogique/numérique (5).

11.  Dispositif selon la revendication 9 ou 10,
caractérisé,
en ce que le dispositif de différentiation est composé d'un organe de formation de différence et d'une mémoire, l'organe de formation de différence calculant tout d'abord, à partir des signaux de pression successifs $(p_1, p_2)$, la différence de signaux $(.p_n = p_2 - p_1)$ et, ensuite, la différence entre les différences de signaux successives $(.p_n - .p_{n-1})$.

12.  Dispositif selon une des revendications 9 à 11,
caractérisé
en ce que la valeur de comparaison spécifiée pour la dérivée seconde de la variation de la pression en fonction du temps ou pour la grandeur proportionnelle à cette dérivée est fixée au moins à zéro.

13.  Procédé pour la protection contre les explosions des installations, conduites et équivalents, opérant par surveillance de valeurs successives dans le temps de la pression du système dans les régions exposées au risque d'explsion, et par comparaison de ces valeurs avec un seuil de pression spécifié supérieur d'une certaine marge de sécurité à la pression du système qui règne dans les conditions normales du fonctionnement, et dans lequel lorsque ce seuil de pression est dépassé, des dispositions de protection contre les explosions, en particulier l'isolation du foyer d'explosion et l'acheminement de fluides extincteurs sont déclenchés,
caractérisé
en ce qu'au moins la dernière des valeurs de pression successives dans le temps est mémorisée, en ce que cette valeur de pression est combinée à une valeur de pression mesurée ultérieurement, pour former une valeur intermédiaire, en ce qu'à cette valeur intermédiaire, est ajoutée la marge de sécurité précitée, pour former un seuil de pression corrigé, et en ce que cette correction du seuil de pression est continuellement répétée, par combinaison de la valeur intermédiaire calculée en dernier avec une une valeur de pression mesurée antérieurement pour l'actualisation du seuil de pression.

14.  Procédé selon la revendication 13,
caractérisé
en ce que le calcul de lavaleur intermédiaire s'effectue selon la formule

$$\underline{\frac{n-1}{n}} \times ZW + \underline{\frac{1}{n}} NW$$

où ZW représente la valeur intermédiaire ancienne, NW la nouvelle valeur de pression, mesurée ultérieurement, et $n \geq 2$, en particulier 2 à 100.

15.  Procédé selon une des revendications 1 à 6 ou 13 à 14,
caractérisé
en ce que la luminosité (rayonnement lumineux, spectre d'onde IR, UV ou autres), dans les régions exposées au risque d'explosion est mesurée et utilisée en remplacement de la pression pour le déclenchement des dispositions des protections contre les explosions.

16.  Procédé selon une des revendications 1 à 6 ou 13 à 14,

caractérisé

en ce que la température régnant dans les régions exposées au risque d'explosion est mesurée et utilisée en remplacement de la pression pour le déclenchement des dispositions de protection contre les explosions.

17. Dispositif selon une des revendications 7 à 12, pour la mise en oeuvre du procédé selon la revendication 15,

caractérisé

en ce qu'en remplacement du capteur de pression (4), il utilise un élément sensible à la lumière.

18. Dispositif selon une des revendications 7 à 12 pour la mise en oeuvre du procédé selon la revendication 16,

caractérisé

en ce qu'en remplacement du capteur de pression (4), il utilise un capteur de température.

19. Dispositif selon une des revendications 7 à 12, 17 ou 18,

caractérisé

en ce que chaque capteur (4) est combiné à son propre microprocesseur (11).

20. Dispositif selon la revendication 19,

caractérisé

en ce que les microprocesseurs (11) sont connectés à une unité de déclenchement centrale (3) sur laquelle on peut spécifier pour tous les microprocesseurs (11) le seuil de pression, de luminosité ou de température, la marge de sécurité et d'autres paramètres, par une commande centralisée.

EP 0 235 693 B1

FIG. 1

FIG. 2

**FIG. 3**

**FIG. 4**